(19) Europäisches Patentamt
European Patent Office
Office européen des brevets

(11) Publication number: 0 156 731
B1

(12) # EUROPEAN PATENT SPECIFICATION

(45) Date of publication of patent specification: 19.12.90

(51) Int. Cl.$^5$: H 04 N 9/83

(21) Application number: 85400553.5

(22) Date of filing: 22.03.85

(54) **Apparatus for magnetically recording and/or reproducing audio and video signals.**

(30) Priority: 24.03.84 JP 56456/84

(43) Date of publication of application:
02.10.85 Bulletin 85/40

(45) Publication of the grant of the patent:
19.12.90 Bulletin 90/51

(84) Designated Contracting States:
AT DE FR GB NL

(56) References cited:
EP-A-0 066 067
EP-A-0 086 496
EP-A-0 087 303

(73) Proprietor: SONY CORPORATION
7-35 Kitashinagawa 6-Chome Shinagawa-ku
Tokyo 141 (JP)

(72) Inventor: Fukuda, Tokuya
c/o SONY CORPORATION 7-35, Kitashinagawa
6-chome
Shinagawa-ku Tokyo (JP)

(74) Representative: Descourtieux, Philippe et al
CABINET BEAU de LOMENIE 55 rue
d'Amsterdam
F-75008 Paris (FR)

EP 0 156 731 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates generally to an apparatus for magnetically recording and/or reproducing audio and video signals, and more particularly, to a magnetic recording and/or reproducing apparatus which is operative to record a frequency-modulated audio signal, together with a video signal, in oblique tracks arranged successively on a magnetic tape by a rotary magnetic head, and to obtain reproduced audio and video signals from the magnetic tape on which the frequency-modulated audio signal is recorded, together with the video signal, in the oblique tracks to be read by the rotary magnetic head.

In video tape recorders generally used, when recording a color television signal on a magnetic tape, chrominance and luminance signals that constitute a color video signal are separated, and the chrominance signal is frequency-converted to have a frequency band lower than the frequency band wherein an appropriate carrier is frequency-modulated by the luminance signal so as to produce a frequency-modulated luminance signal. The frequency-converted chrominance signal and the frequency-modulated luminance signal are mixed to form a processed color video signal that is recorded through two rotary magnetic heads on the magnetic tape in successive and parallel record tracks extending obliquely with respect to the running direction of the magnetic tape. In such a system for recording a color television signal, an audio signal is recorded through a stationary magnetic head on the magnetic tape in a separate audio track extending in the running direction of the magnetic tape.

In relation to such a recording system, it has been known to restrict the speed at which the magnetic tape is transported so that the oblique tracks are positioned to be immediately adjacent to each other, that is, so that the spaces or so-called guard bands between the adjacent oblique tracks will be eliminated, in order to increase the recording density of the processed color video signal on the magnetic tape, and thereby to increase the duration of the recording. In such a case, however, the problem of "cross-talk" between these closely arranged oblique tracks arises in the reproduction mode wherein the processed color video signal is read from the oblique tracks on the magnetic tape. This problem of cross-talk can be solved by providing two rotary magnetic heads, which form the oblique tracks alternately, with different azimuth angles so that a substantial azimuth loss is obtained in cross-talk components derived from the adjacent oblique tracks, and in addition, by causing the chrominance signal to be subjected to appropriate circuit treatments before being recorded on magnetic tape and after being read from the magnetic tape.

When high density recording of the processed color video signal is effected as described above, the transport speed of the magnetic tape is necessarily quite low under the condition wherein the desired relative velocity between the magnetic tape and the rotary magnetic heads is maintained. Thus, the relative velocity between the magnetic tape and the stationary magnetic head, which records the audio signal in the audio track, is also quite low, with the result that the quality of the recorded audio signal is deteriorated.

It has been proposed that the audio signal be frequency-modulated and then mixed with the processed color video signal to provide a mixed signal supplied to the rotary magnetic heads for recording the mixed signal in the oblique tracks so as to prevent deteriorations in the quality of the recorded audio signal caused due to the low relative velocity between a recording head and the magnetic tape. In such a different recording system, it is required that an arrangement for eliminating substantially a beat trouble in a reproduced audio signal caused by cross-talk in respect to the frequency-modulated audio signal between each two adjacent oblique tracks is also provided.

In the recording system wherein the frequency-modulated audio signal is recorded, together with the processed color video signal, in the oblique tracks on the magnetic tape, as shown in Fig. 1 with the axis of abscissa representing the frequency F and the axis of ordinate representing the level L, a frequency-modulated audio signal Af which is obtained by frequency-modulating a carrier having a predetermined frequency by an original audio signal is arranged so as to appear in the relatively narrow space behind the upper boundary portion of the frequency band of a frequency-converted chrominance signal Cc and the lower boundary portion of the frequency band of a frequency-modulated luminance signal Yf extending in its lower side band, and a mixed signal which contains the frequency-modulated audio signal Af and a processed color video signal composed of the frequency-converted chrominance signal Cc and the frequency-modulated luminance signal Yf is supplied to the rotary magnetic heads and thereby recorded in the oblique tracks on the magnetic tape.

In such a case, a carrier frequency Fa of the frequency-modulated audio signal Af is selected to be, for example, 1.5 MHz and the width of the frequency deviation range thereof is determined to be, for example, 100 to 150 kHz. The frequency-modulated luminance signal Yf is formed to have the frequency deviation range obtained by such a frequency-modulation that the leading edge of the synchronous signal portion of a luminance signal Y separated from an original color television signal corresponds to a frequency Fs of, for example, 4.2 MHz, while the white peak (the maximum amplitude) of the luminance signal Y corresponds to a frequency Fp of, for example, 5.4 MHz. The frequency-converted chrominancesignal Cc is formed to have a color subcarrier frequency Fc of, for example, about 743 kHz. Further, the level of the frequency-modulated audio signal Af is set to be lower than the level of the frequency-converted chrominance signal Cc, which is lower than the level of the frequency-modulated luminance signal Yf.

When the above-mentioned recording system wherein the frequency-modulated audio signal is recorded in the oblique tracks on the magnetic tape together with the processed color video signal composed of the frequency-converted chrominance signal and the frequency-modulated luminance signal is adopted, the recorded audio signal is released from deteriorations in its quality resulting from the low transport speed of the magnetic tape. However, in the case where two-channel audio signals such as left and right channel signals forming a stereophonic audio signal are recorded according to this recording system, two carriers having their respective frequencies distant by, for example, 150 kHz from each other are frequency-modulated by these audio signals, respectively, so as to produce two individual frequency-modulated audio signals, each of which has a width of frequency deviation range determined to be, for example, 100 to 150 kHz, and which occupy an expanded frequency band between the frequency bands of the frequency-converted chrominance signal and frequency-modulated luminance signal. Consequently, the side band of each of the frequency-converted chrominance signal and frequency-modulated luminance signal is suppressed to be narrowed by the expanded frequency band of the two frequency-modulated audio signals, so that a reproduced picture obtained in accordance with reproduced chrominance and luminance signals is deteriorated in its quality. In such a case, that the audio frequency band between the frequency bands of the frequency-converted chrominance signal and frequency-modulated luminance signal is restricted so as not to suppress the side band of each of the frequency-converted chrominance signal and the frequency-modulated luminance signal, it is difficult to record two-channel audio signals though a single-channel audio signal can be recorded without troubles.

On the other hand, in an apparatus disclosed in EP—A—0 066 067, two channel audio signals are used for frequency-modulating two independent carriers having different frequencies, for example 1.07 MHz and 1.31 MHz, respectively, to produce two frequency-modulated audio signals. The frequency-modulated audio signals thus produced occupy a relatively broad continuous frequency band and therefore upper and lower parts of the frequency band occupied by the frequency-modulated audio signals overlap with the frequency bands of the frequency-converted chrominance signal and the frequency-modulated luminance signal, respectively, when the frequency-modulated audio signals are magnetically recorded together with the frequency-converted chrominance signal and the frequency-modulated luminance signal. This results in that each of the frequency-converted chrominance signal and the frequency-modulated luminance signal is apt to be subjected to severe interference by the frequency-modulated audio signals.

Accordingly, it is an object of the present invention to provide a magnetic recording apparatus for recording audio and video signals, by which one or more audio signals are converted into one or more frequency-modulated audio signals and recorded in oblique record tracks on a magnetic tape together with a frequency-converted chrominance-signal and a frequency-modulated luminance signal in such a manner that the frequency-modulated audio signal is located in an audio frequency band arranged between the frequency bands of the frequency-converted chrominance-signal and the frequency-modulated luminance signal, and which can record two-channel audio signals with such a relatively narrow audio frequency band that may not substantially exert an adverse influence upon the frequency bands of the frequency-converted chrominance signal and the frequency-modulated luminance signal and also, more particularly, which can record two-channel audio signals without expanding substantially the width of the audio frequency band compared with that arranged for recording a single-channel audio signal.

According to an aspect of the present invention, this object is attained by means of an apparatus for magnetically recording two-channel audio signals, together with a color video signal, on a magnetic tape in successive record tracks formed by a rotary magnetic head, said tracks extending obiquely with respect to the running direction of the magnetic tape, comprising:

luminance signal processing means for generating a frequency-modulated luminance signal obtained by frequency-modulating a video carrier by a luminance signal constituting partially the color video signal,

chrominance signal processing means for generating a frequency-converted chrominance signal obtained by frequency-converting a chrominance signal constituting the color video signal together with the luminance signal to a frequency band lower than the frequency band wherein the video carrier is frequency-modulated by the luminance signal, and

signal mixing means for producing a mixed signal obtained by causing frequency-modulating audio signal to be located between the frequency bands of said frequency-modulated luminance signal and frequency-converted chrominance signal and supplying the rotary magnetic head with said mixed signal.

According to the invention, audio signal processing means, having time-multiplex operating means (operative to have a multiplexing duration narrower than a line period of said color video signal and a common frequency modulator, are provided for generating a frequency-modulated audio signal including first segments of a frequency-modulated signal obtained by frequency-modulating an audio carrier having a predetermined frequency in response to one of the two-channel audio signals, and second segments of a frequency-modulated signal obtained by frequency-modulating an audio carrier having the predetermined frequency in response to the other of the two-channel audio signals, said first and second segments being arranged to be successively alternating every multiplexing duration, and said mixing means being supplied with the frequency-modulated audio signal.

A further object of the present invention is to provide a magnetic reproducing apparatus for reproducing audio and video signals from a magnetic tape such as obtained by means of the above-defined recording apparatus, i.e. for reproducing two-channel audio signals and a color video signal from a magnetic tape on which the two-channel audio signals are recorded as a frequency-modulated audio signal including a succession of alternately first segments of a frequency-modulated signal obtained by frequency-modulating and audio carrier in response to one of the two-channel audio signals and second segments of a frequency-modulated signal obtained by frequency-modulating the audio carrier in response to the other of the two-channel audio signals, said segments having a predetermined duration, together with the color video signal in the form of a combination of frequency-modulated luminance signal and frequency-converted chrominance signal, in successive record tracks extending obliquely with respect to the running direction of the magnetic tape.

According to another aspect of the invention, this further object is attained by means of an apparatus comprising a video signal reproducing circuit for reproducing luminance and chrominance signals in accordance with the frequency-modulated luminance signal and frequency-converted chrominance signal obtained from the magnetic tape and further comprising, according to the invention, an audio signal demodulating circuit for frequency dedulating the frequency-modulated audio signal obtained from the magnetic tape, this audio signal including first segments of a frequency-modulated signal obtained by frequency-modulating an audio carrier having a predetermined frequency in response to one of the two-channel audio signals, and second segments of a frequency-modulated signal obtained by frequency-modulating an audio carrier having the predetermined frequency in response to the other of the two-channel audio signals, said first and second segments being arranged to be successively alternating every multiplexing duration, said demodulating means producing demodulated outputs of the first and second segments alternately, wherein an audio signal separating means is provided for separating the demodulated output of the first segments and the demodulated output of the second segments from each other and for producing the two-channel audio signals in accordance with the separated demodulated outputs of the first and second segments, respectively.

In the recording or reproducing apparatus thus constituted in accordance with the present invention, the two-channel audio signals are converted into a single frequency-modulated audio signal and located in an audio frequency band arranged between the frequency bands of the frequency-modulated luminance and frequency-converted chrominance signals to be recorded in the successive oblique record tracks formed by the rotary magnetic head on the magnetic tape together with the frequency-modulated luminance and frequency-converted chrominance signals, and then in the reproducing mode, reproduced two-channel audio signals are obtained independently, in addition to reproduced luminance and chrominance signals constituting a reproduced color video signal. In addition, not only the two-channel audio signals recorded on the magnetic tape are released from deterioration in their quality resulting from the low transport speed of the magnetic tape, but also, since the two-channel audio signals are recorded and then reproduced without expanding substantially the width of the audio frequency band arranged between the frequency bands of the frequency-modulated luminance and the frequency-converted chrominance signals with that provided for recording a single-audio signal, there is no suppression of the side band of the frequency-modulated luminance signal and the frequency-converted chrominance signal by the audio frequency band with a resulting deterioration of the quality of the picture obtained in accordance with the reproduced color video signal.

Further, with the magnetic recording apparatus according to the present invention, the two-channel audio signals are recorded on the magnetic tape in such a manner that at least one of the two-channel audio signals can be easily reproduced when such a magnetic tape is applied to a reproducing apparatus which is operative to reproduce a single-channel audio signal. This means that the magnetic recording apparatus according to the present invention is operative to be compatible with the reproducing apparatus with which a single-channel audio signal can be reproduced and accordingly so convenient in actual use.

According to still another aspect of the present invention, there is provided a magnetic recording and reproducing apparatus for magnetically recording and reproducing audio and video signals, said apparatus combining the features of the above defined recording apparatus and reproducing apparatus.

The above, and other objects, features and advantages of the present invention will be more readily apparent from the following detailed description which is to be read in conjunction with the accompanying drawings, wherein:

Fig. 1 is a diagram showing the frequency spectrum of frequency-modulated audio signal, frequency-modulated luminance signal and frequency-converted chrominance signal, to which reference are made in explaining the recording of audio and color video signals in oblique record tracks on a magnetic tape;

Fig. 2 is a block diagram showing one embodiment of magnetic recording apparatus according to the present invention;

Fig. 3 is a block diagram showing one embodiment of magnetic recording apparatus according to the present invention;

Figs. 4A to 4H are diagrams showing waveforms and signal sequences to which references are made in explaining the operation of each of the embodiments shown in Figs. 2 and 3; and

Fig. 5 is a block diagram showing a portion of another embodiment of magnetic recording apparatus according to the present invention.

Fig. 2 shows an example of the magnetic recording apparatus according to the present invention, by which a stereophonic audio signal composed of left and right channel signals is recorded together with a color video signal on a magnetic tape.

Referring to Fig. 2, a right channel signal SR and a left channel signal SL of the stereophonic audio signal are supplied to audio signal input terminals 1 and 2, respectively. The right channel signal SR is restricted to have the frequency-band lower than a line frequency of a television signal by a low pass filter 3 and then supplied to an input terminal of a sampling and hold circuit 5. Similarly, the left channel signal SL is restricted to have the frequency-band lower than the line frequency of the television signal by a low pass filter 4 and then supplied to an input terminal of a sampling and hold circuit 6.

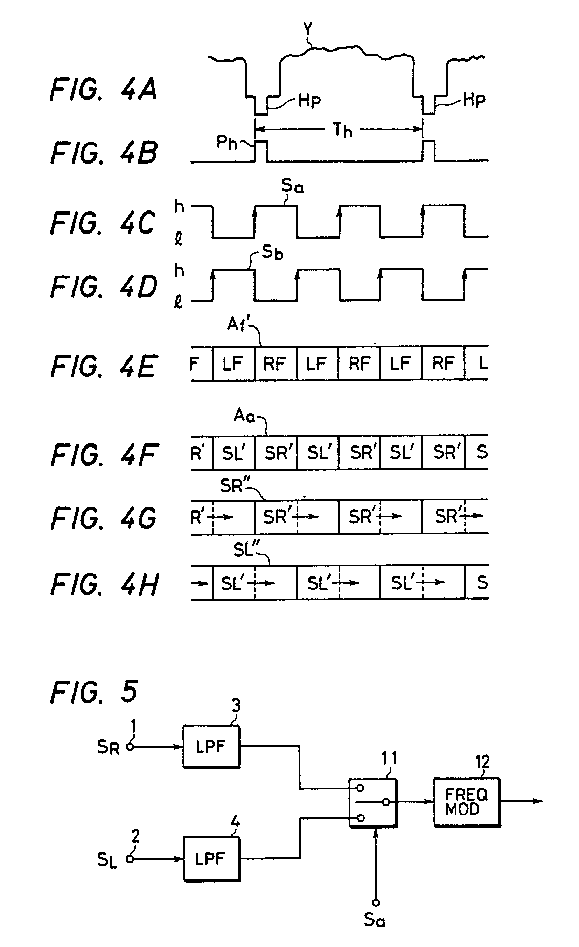

Further, a luminance signal Y separated from a color television signal, as shown in Fig. 4A, is supplied through a luminance signal input terminal 7 to a synchronous signal separating circuit 8 and a line synchronous pulse pH, as shown in Fig. 4B, is obtained from the synchronous signal separating circuit 8 in synchronism with a line synchronous signal Hp in the luminance signal Y. The line synchronous pulse Ph is supplied to a pulse generating circuit 9 and a pulse signal Sa appearing in synchronism with the line synchronous pulse Ph with a frequency 2Fh which is twice as high as the frequency of the line synchronous pulse pH, namely, the line frequency Fh of the luminance signal Y, as shown in Fig. 4C, is obtained from the pulse generating circuit 9. This pulse signal Sa is formed to have the duty factor of fifty percents and to take a high level *h* and a low level *l* alternately every duration corresponding to a quarter of a line period Th of the luminance signal Y. The pulse signal Sa thus obtained is supplied to a control terminal of the sampling and hold circuit 5 and to an inverter 10. The inverter 10 produces a pulse signal Sb which is inverted in level in relation to the pulse signal Sa, as shown in Fig. 4D, and supplies the same to a control terminal of the sampling and hold circuit 6.

In the sampling and hold circuit 5, the level of the right channel signal SR having been subjected to the frequency-band restriction by the low pass filter 3 is sampled at a time point of each rising edge of the pulse signal Sa, as indicated by an arrow in Fig. 4C, and each sampled level is held for a duration corresponding to a period between two contiguous rising edges of the pulse signal Sa, that is, a period of a half of the line period Th, so that a sampled and held output SR′ concerning the right channel signal Sr is obtained at an output terminal of the sampling and hold circuit 5 to be supplied to a contact *a* of a switch 11. Similarly, in the sampling and hold circuit 6, the level of the left channel signal SL having been subjected to the frequency-band restriction by the low pass filter 4 is sampled at a time point of each rising edge of the pulse signal Sb, as indicated by an arrow in Figure 4D, and each sampled level is held for a duration corresponding to a period between two contiguous rising edge of the pulse signal Sb, that is, a period of a half of the line period Th, so that a sampled and held output SL′, concerning the left channel signal SL is obtained at an output terminal of the sampling and hold circuit 6 to be supplied to a contact *b* of the switch 11. Because each of the right and left channel signals SR and SL is applied for sampling and hold operation with the pulse signal Sa or Sb having the frequency 2Fh as a sampling signal in the manner as mentioned above, the right and left channel signals SR and SL are restricted to have the frequency band lower than the line frequency Fh in the low pass filters 3 and 4, respectively.

A control terminal of the switch 11 is supplied with the pulse signal Sa from the pulse generating circuit 9 and a movable contact of the switch 11 is controlled to be connected to the contact *a* when the pulse signal Sa takes the high level *h* and to the contact *b* when the pulse signal Sa takes the low level 1. As a result of this, the sampled and held output SR′ concerning the right channel signal SR and the sampled and held output SL′ concerning the left channel signal SL are derived from the switch 11 alternately every duration corresponding to a quarter of the line period Th, and then supplied to a frequency-modulating circuit 12.

In the frequency-modulating circuit 12, an audio carrier having the frequency of, for example, 1.5 MHz is frequency-modulated by the sampled and held outputs SR′ and SL′ successively with the frequency deviation range of, for example, about ±100 kHz, so that a frequency-modulated audio signal Af′ as shown in Fig. 4E is obtained at an output terminal of the frequency-modulating circuit 12 to be derived through a band pass filter 13 and supplied to a mixing circuit 14. The frequency-modulated audio signal Af′ is composed of segments RF resulting from the frequency-modulation of the audio carrier by the sampled and held outputs SR′ and segments LF resulting from the frequency-modulation of the audio carrier by the sampled and held outputs SL′, which appear alternately every duration corresponding to a quarter of the line period Th, and has the level and the frequency band extending to the upper and lower sides of the carrier frequency Fa of 1.5 MHz similar to those of the frequency-modulated audio signal Af shown in Fig. 1.

Meanwhile, a chrominance signal C separated from the color television signal from which the luminance signal Y is separated is supplied to a frequency-converted chrominance signal generating circuit 15 forming a chrominance signal processing circuit portion, while the luminance signal Y is supplied also to a frequency-modulated luminance signal generating circuit 16 forming a luminance signal processing circuit portion. The frequency-modulated luminance signal generating circuit 16 is operative to frequency-modulate a video carrier by the luminance signal Yf as aforementioned and shown in Fig. 1, and the frequency-converted chrominance signal generating circuit 15 is operative to frequency-convert the chrominance signal C to the frequency band lower than the frequency band of the frequency-modulated luminance signal Yf and produce the frequency-converted chrominance signal Cc as aforementioned and shown in Fig. 1. These frequency-modulated luminance signal Yf and frequency-converted chrominance signal Cc are supplied to the mixing circuit 14 to which the frequency-modulated audio signal Af′ is also supplied through the band pass filter 13.

In the mixing circuit 14, the frequency-modulated audio signal Af′ is mixed with the frequency-modulated luminance signal Yf and the frequency-converted chrominance signal Cc to be located in a relatively narrow frequency band arranged between the frequency bands of the frequency-modulated luminance signal Yf and the frequency-converted chrominance signal Cc, without suppressing substantially the side band of each of the frequency-modulated luminance signal Yf and the frequency-converted chrominance signal Cc, so as to produce a mixed signal Sm. The mixed signal Sm obtained from the mixing circuit 14 is supplied through an amplifier 17 to a pair of rotary magnetic heads 18a and 18b, which have different azimuth angles and are rotated to scan alternately a magnetic tape at high relative velocity to successive oblique record tracks on the magnetic tape, and the signal Sm is recorded in the successive oblique record tracks on the magnetic tape by the rotary magnetic heads 18a and 18b.

Accordingly, the right channel signal SR and the left channel signal SL are recorded in the form of the frequency-modulated audio signal Af′ in the successive oblique record tracks formed by the rotary magnetic heads 18a and 18b on the magnetic tape, together with the frequency-modulated luminance signal Yf and the frequency-converted chrominance signal Cc without exerting substantially an adverse influence upon the frequency bands of the frequency-modulated luminance signal Yf and the frequency-converted chrominance signal Cc.

Fig. 3 shows an example of the magnetic reproducing apparatus according to the present invention, which is adapted to reproduce the right channel signal SR and the left channel signal SL, in addition to the luminance signal Y and the chrominance signal C, from the magnetic tape on which the mixed signal Sm, which contain the frequency-modulated luminance signal Yf, the frequency-converted chrominance signal Cc and the frequency-modulated audio signal Af′ located in the frequency band arranged between the frequency bands of the frequency-modulated luminance signal Yf and the frequency-converted chrominance signal Cc, is recorded by the recording apparatus shown in Fig. 2.

Referring to Fig. 4, the rotary magnetic heads 18a and 18b are provided to be used in common with the recording apparatus shown in Fig. 2 and arranged to scan alternately the oblique record tracks on the magnetic tape to read the mixed signal Sm therefrom in such a manner that each of the oblique record tracks is traced by one of the rotary magnetic heads 18a and 18b with the azimuth angle corresponding to that of the rotary magnetic head used for forming the oblique record track traced, so that cross-talk components derived from adjacent tracks in the outputs of the rotary magnetic heads 18a and 18b are suppressed.

The segments of the mixed signal Sm read from the respective oblique record tracks on the magnetic tape by the rotary magnetic heads 18a and 18b, respectively, are supplied through amplifiers 20a and 20b to a switch 20c to be derived alternately therefrom to form the mixed signal Sm reproduced continuously. The mixed signals Sm from the switch 20c is supplied to a band pass filter 21, a high pass filter 22 and a low pass filter 23. The frequency-modulated audio signal Af′ in the mixed signal Sm is extracted by the band pass filter 21 and supplied to a frequency-demodulating circuit 24 to be frequency-demodulated therein. As a result of this frequency-demodulation, a reproduce audio signal Aa is obtained at an output terminal of the frequency-demodulating circuit 24 and derived through a low pass filter 25 to be supplied to both sampling and hold circuits 26 and 27. This reproduced audio signal Aa contains the segments of the sampled and held outputs SR′ concerning the right channel signal SR and the segments of the sampled and held outputs SL′ concerning the left channel signal SL which appear alternately every duration corresponding to a quarter of the line period Th, as shown in Fig. 4F.

The frequency-modulated luminance signal Yf in the mixed signal Sm from the switch 20c is extracted through the high pass filter 22 and supplied to a frequency-demodulating circuit 28 to be frequency-demodulated therein. As a result, a reproduced luminance signal Y′ is obtained at an output terminal of the frequency-demodulating circuit 28 and derived through a low pass filter 29 to be supplied to a synchronous signal separating circuit 30. From the synchronous signal separating circuit 30, a line synchronous pulse Ph′ is obtained in synchronism with the line synchronous signal in the reproduced luminance signal Y′, in the same manner as the line synchronous pulse Ph shown in Fig. 4B. The line synchronous pulse Ph′ is supplied to a pulse generating circuit 31 and a pulse signal Sa' appearing in synchronism with the line synchronous pulse Ph' with the frequency 2Fh is obtained from the pulse generating circuit 31. This pulse signal Sa' is formed to have the duty factor of fifty percents and to take high and low levels alternately every duration corresponding to a quarter of the line period Th in the same manner as the pulse signal Sa shown in Fig. 4C. The pulse signal Sa' thus obtained is supplied to a control terminal of the sampling and hold circuit 26 and to an inverter 32. The inverter 32 produces a pulse signal Sb' which is inverted in level in relation to the pulse signal Sa' and formed in the same manner as the pulse signal Sb shown in Fig. 4D and supplies the same to a control terminal of the sampling and hold circuit 27.

In the sampling and hold circuit 26, the segment of the sampled and held output SR' in the reproduce audio signal Aa is sampled at a time point of each rising edge of the pulse signal Sa' corresponding to each rising edge of the pulse signal Sa indicated by the arrow in Fig. 4C, and each sampled segment is held for a duration corresponding to a period between two contiguous rising edges of the pulse signal Sa', that is, a half of the line period Th, so that a sampled and held output SR'' concerning the sampled and held output SR', as shown in Fig. 4G, is obtained at an output terminal of the sampling and hold circuit 26. Similarly, in the sampling and hold circuit 27, the segment of the sampled and held output SL' in the reproduce audio signal Aa is sampled at a time point of each rising edge of the pulse signal Sb' corresponding to each rising edge of the pulse signal Sb indicated by the arrow in Fig. 4D, and each sampled segment is held for a duration corresponding to a period between two contiguous rising edges of the pulse signal Sb', so that a sampled and held output SL'' concerning the sampled and held output SL', as shown in Fig. 4H, is obtained at an output terminal of the sampling and hold circuit 27.

The sampled and held outputs SR'' and SL'' are supplied to low pass filters 33 and 34, respectively. The low pass filter 33 produced a reproduced right channel signal SR having the frequency band extending in the range lower than the line frequency Fh in response to the sampled and held outputs SR'' supplied thereto, and the reproduced right channel signal SR thus obtained in the low pass filter 33 is derived from an audio signal output terminal 35. Similarly, the low pass filter 34 produces a reproduced left channel signal SL having the frequency band extending in the range lower than the line frequency Fh in response to the sampled and held outputs SL'' supplied thereto, and the reproduced right channel signal SL thus obtained in the low pass filter 34 is derived from an audio signal output terminal 36.

Further, the frequency-converted chrominance signal Cc in the mixed signal Sm from the switch 20c is extracted through the low pass filter 23 and supplied to a video signal processing circuit 37, together with reproduced luminance signal Y' obtained from the low pass filter 29. In the video signal processing circuit 37, the frequency-converted chrominance signal Cc is frequency-converted again to the original frequency band so as to be a reproduced chrominance signal, and then the reproduced luminance signal Y', and the reproduced chrominance signal are processed to an appropriate color video signal.

In the manner described above, with the reproducing apparatus according to the present invention, the right channel signal SR and the left channel signal SL constituting the stereophonic audio signal are reproduced independently, in addition to the color video signal, from the magnetic tape on which the frequency-modulated audio signal Af' is recorded, together with the frequency-modulated luminance signal Yf and the frequency-converted chrominance signal Cc, in the oblique record tracks by the recording apparatus shown in Fig. 2.

In the recording apparatus shown in Fig. 2, the right channel signal Sr and the left channel signal SL are subjected to the sampling and hold operations by the sampling and hold circuits 5 and 6, respectively, and then processed to be recorded on the magnetic tape. Consequently, in the reproducing apparatus shown in Fig. 3, the sampling operation in the sampling and hold circuit 26 is allowed to be performed at any time point within a period of a quarter of the line period Th corresponding to the duration of each segment of the sampled and held output SR' in the reproduced audio signal Aa, and likewise the sampling operation in the sampling and hold circuit 27 is allowed to be performed at any time point within a period of a quarter of the line period Th corresponding to the duration of each segment of the sampled and held output SL' in the reproduced audio signal Aa, so that exactness in timing for the sampling operations performed for reproducing the right channel signal SR and the left channel signal SL can be achieved.

However, it is not necessarily required to provide the sampling and hold circuits 5 and 6 in the recording circuits of the apparatus according to the present invention, and it is also possible to have an arrangement wherein the right channel signal SR from the audio signal input terminal 1 and the left channel signal SL from the audio signal input terminal 2 are supplied directly to the switch 11 which is controlled by the pulse signal Sa after passing through the low pass filters 3 and 4, respectively, and then derived therefrom alternately every duration corresponding to a quarter of the line period Th to be supplied to the frequency-modulating circuit 12, as shown in Fig. 5, so that segments of a frequency-modulated signal resulting from the frequency-modulation of the audio carrier by the right channel signal SR and segments of a frequency-modulated signal resulting from the frequency-modulation of the audio carrier by the left channel signal SL are obtained alternately from the frequency-modulating circuit 12.

In addition, although the sampling rate in each of the sampling and hold circuits 5 and 6 in the recording apparatus shown in Fig. 2 is selected to be a half of the line period Th it is to be understood that the sampling and hold circuits 5 and 6 are not limited thereto, and that various appropriate rates may be taken for the sampling operation in each of the sampling and hold circuit 5 and 6.

**Claims**

1. An apparatus for magnetically recording two-channel audio signals, together with a color video signal, on a magnetic tape in successive record tracks formed by a rotary magnetic head (18a; 18b), said tracks extending obliquely with respect to the running direction of the magnetic tape, comprising:

luminance signal processing means (16) for generating a frequency-modulated luminance signal obtained by frequency-modulating a video carrier by a luminance signal constituting partially the color video signal,

chrominance signal processing means (15) for generating a frequency-converted chrominance signal obtained by frequency-converting a chrominance signal constituting the color video signal together with the luminance signal to a frequency band lower than the frequency band wherein the video carrier is frequency-modulated by the luminance signal, and

signal mixing means (14, 17) for producing a mixed signal obtained by causing frequency-modulating audio signal to be located between the frequency bands of said frequency-modulated luminance signal and frequency-converted chrominance signal and supplying the rotary magnetic head (18a; 18b) with said mixed signal,

characterized in that audio signal processing means (1 to 13), having time-multiplex operating means (5 6, 11) operative to have a multiplexing duration narrower than a line period (Th) of said color video signal and a common frequency modulator (12), are provided for generating a frequency-modulated audio signal including first segments of a frequency-modulated signal obtained by frequency-modulating an audio carrier having a predetermined frequency (Fa) in response to one of the two-channel audio signals, and second segments of a frequency-modulated signal obtained by frequency-modulating an audio carrier having the predetermined frequency (Fa) in response to the other of the two-channel audio signals, said first and second segments being arranged to be successively alternating every multiplexing duration, and said mixing means (14, 17) being supplied with the frequency-modulated audio signal.

2. An apparatus according to claim 1, characterized in that said audio signal processing means (1 to 13) comprises first sampling and hold means (5) for sampling one of the two-channel audio signals at every first periodic time point and holding each sampled output for a duration corresponding to a period between contiguous two of said first periodic time points, second sampling and hold means (6) for sampling the other of the two-channel audio signals at every second periodic time point and holding each sampled output for a duration corresponding to a period between contiguous two of said second periodic time points, combining means (11) for combining first and second sampled and held outputs obtained from said first and second sampling and hold means (5, 6) respectively, so as to form a substantially continuous signal containing segments of said first and second sampled and held outputs arranged to be successive alternately every said predetermined duration, and frequency-modulating means (12) for frequency-modulating said audio carrier by said substantially continuous signal.

3. An apparatus according to claim 2, characterized in that said combining means (11) comprises switching means for extracting the segments of said first sampled and held output and the segments of said second sampled and held output alternately every said predetermined duration from said first and second sampled and held outputs.

4. An apparatus according to claim 1, characterized in that said audio signal processing means (1 to 13) comprises switching means (11) for extracting segments of one of the two-channel audio signals and segments of the other of the two-channel audio signals alternately every said predetermined duration from the two-channel audio signals, and frequency-modulating means (12) for frequency-modulating said audio carrier by said segments of one and the other of the two-channel audio signals extracted by said switching means (11).

5. An apparatus for magnetically reproducing two-channel audio signals and a color video signal from a magnetic tape on which the two-channel audio signals are recorded together with the color video signal in the form of a combination of frequency-modulated luminance and frequency-converted chrominance signals, in successive record tracks extending obliquely with respect to the running direction of the magnetic tape, said apparatus having a video signal reproducing means (37) for reproducing luminance and chrominance signals in accordance with the frequency-modulated luminance signal and the frequency-converted chrominance signal obtained from the magnetic tape, characterized in that an audio signal demodulating means (24) is provided for frequency-demodulating the frequency-modulated audio signal obtained from the magnetic tape, this audio signal including first segments of a frequency-modulated signal obtained by frequency-modulating an audio carrier having a predetermined frequency (Fa) in response to one of the two-channel audio signals, and second segments of a frequency-modulated signal obtained by frequency-modulating an audio carrier having the predetermined frequency (Fa) in response to the other of the two-channel audio signals, said first and second segments being arranged to be successively alternating every multiplexing duration, said demodulating means (24) producing demodulated outputs of the first and second segments alternately, and in that an audio signal separating means (26, 27, 33, 34) is provided for separating the demodulated output of the first segments and the demodulated output of the second segments from each other and for producing the two-channel audio signals in accordance with the separated demodulated outputs of the first and second segments, respectively.

6. An apparatus according to claim 5, characterized in that said audio signals separating means (26, 27, 33, 34) comprises first sampling and hold means (26) for sampling the demodulated output of the first segments at every first periodic time point and holding each sampled output for a duration corresponding substantially to a period between contiguous two of said first periodic time points, second sampling and hold means (27) for sampling the demodulated output of the second segments at every second periodic time point and holding each sampled ouotput for a duration corresponding substantially to a period between contiguous two of said second periodic time points, first filter means (33) for making the sampled and held output obtained from said first sampling and hold means (26) pass therethrough, and second filter means (34) for making the sampled and held output obtained from said second sampling and hold means (27) pass therethrough.

7. An apparatus for magnetically recording two-channel audio signals, together with a color video signal, on a magnetic tape in successive record tracks formed by a rotary magnetic head (18a; 18b), said tracks extending obliquely with respect to the running direction of the magnetic tape and for magnetically reproducing the two-channel audio signals and the color video signal from the magnetic tape, said apparatus including:

luminance signal processing means (16) for generating a frequency-modulated luminance signal obtained by frequency-modulating a video carrier by a luminance signal constituting partially the color video signal;

chrominance signal processing means (15) for generating a frequency-converted chrominance signal obtained by frequency-converting a chrominance signal constituting the color video signal together with the luminance signal to a frequency band lower than the frequency band wherein the video carrier is frequency-modulated by the luminance signal;

signal mixing means (14, 17) for producing a mixed signal obtained by causing said frequency-modulated audio signal to be located between the frequency bands of said frequency-modulated luminance signal and frequency-converted chrominance signal and supplying the rotary magnetic head (18a; 18b) with said mixed signal, and

video signal reproducing means (37) for reproducing the luminance and chrominance signals in accordance with said frequency-modulated luminance signal and said frequency-converted chrominance signal in said mixed signal obtained from the magnetic tape,

said apparatus being characterized by an arrangement comprising:

audio signal processing means (1 to 13) having time-multiplex operating means (5, 6, 11) operative to have a multiplexing duration narrower than a line period (Th) of said color video signal and a common frequency modulator (12), provided for generating a frequency-modulated audio signal including first segments of a frequency-modulated signal obtained by frequency-modulating an audio carrier having a predetermined frequency (Fa) in response to one of the two-channel audio signals, and second segments of a frequency-modulated signal obtained by frequency-modulating an audio carrier having the predetermined frequency (Fa) in response to the other of the two-channel audio signals, said first and second segments being arranged to be successively alternating every multiplexing duration, and said mixing means (14, 17) being supplied with the frequency-modulated audio signal; and

audio signal demodulating means (24) for frequency-demodulating the frequency-modulated audio signal obtained from the magnetic taped to produce demodulated outputs of the first and second segments alternately, an audio signal separating means (26, 27, 33, 34) being provided for separating the demodulated output of the first segments and the demodulated output of the second segments from each other and for producing the two-channel audio signals in accordance with the separated demodulated outputs of the first and second segments, respectively.

**Patentansprüche**

1. Gerät, um zweikanalige Tonsignale zusammen mit einem Farbvideo-signal auf einem Magnetband in aufeinanderfolgenden Aufzeichnungsspuren magnetisch aufzuzeichnen, die mit einem rotierenden Magnetkop (18a; 18b) ausgebildet werden, wobei die Spuren schräg zur Laufrichtung des Magnetbands verlaufen, wobei das Gerät enthält:

Leuchtdichtesignal-Verarbeitungsmittel (16), um ein frequenzmoduliertes Leuchtdichtesignal zu erzeugen, das man durch die Frequenzmodulation eines Videoträgers mit einem Leuchtdichtesignal erhält, das Teil des Fahrbvideosignals ist,

Chrominanzsignal-Verarbeitungsmittel (15), um ein frequenzumgesetztes Chrominanzsignal zu erzeugen, das man durch die Frequenzumsetzung eines zusammen mit dem Leuchtdichtesignal das Farbvideosignals bildenden Chromanzsignals in ein Frequenzband erhält, das unterhalb jenes Frequenzbands liegt, in dem der Videoträger mit dem Leuchtdichtesignal frequenzmoduliert wird, und

Signalschmittel (14, 17) um ein Mischsignal zu erzeugen, das man dadurch erhalt, dass das Tonsignal frequenzmoduliert wird, so dass es zwischen den Frequenzbändern des frequenzmodulierten Leuchtdichtesignals und des frequenzumgesetzten Chrominansignals angeordnet ist, wobei das Mischsignal an den rotierenden Magnetkopf (18a; 18b) gelegt wird,

dadurch gekennzeichnet, dass Tonsignal-Verarbeitungsmittel (1 bis 13) vorgesehen sind, die Zeitmultiplex-Operationsmittel (5, 6, 11) aufweisen, die so wirksam sind, dass sie eine Multiplexdauer besitzen, die kleiner als ein Zeilenintervall (Th) des Farbvideosignals ist, und einen gemeinsamen Frequenzmodulator (12), wobei die genannten Tonsignal-Verarbeitungsmittel (1 bis 13) dazu vorgesehen sind, ein frequenzmoduliertes Tonsignal zu erzeugen, das erste Segmente eines frequenzmodulierten Signals umfasst, welche man durch die Frequenzmodulation eines Tonträgers, der eine vorgegebene-Frequenz (Fa) besitzt, in Antwort auf eins der zweikanaligen Tonsignale erhält, sowie zweite Segmente eines frequenzmodulierten Signals, welche man durch die Frequenzmodulation eines Tronträgers, der eine vorgegebene Frequenz (Fa) besitzt, in Antwort auf das andere der zweikanaligen Tonsignale erhält, wobei die ersten und zweiten Segmente nacheinander und abwechselnd während jeder Multiplexdauer angeordnet sind, und wobei die genannten Mischmittel (14, 17) mit dem frequenzmodulierten Tonsignal angesteurt wird.

2. Gerät gemäss Anspruch 1, dadurch gekennzeichnet, dass das genannte Tonsignale-Verarbeitungsmittel (1 bis 13) erste Abtast/Halte-Mittel (5) aufweist, um eines der zweikanaligen Tonsignale zu jedem ersten periodischen Zeitpunkt abzutasten und jeden abgetasten Ausgang für eine Dauer zu halten, die einem Intervall zwischen zwei benachbarten ersten periodischen Zeitpunkten entspricht, zweite Abtast/Halte-Mittel (6), um das andere der zweilkanaligen Tonsignale zu jedem zweiten periodischen Zeitpunkt abzutasten und jeden abgetasteten Ausgang für die eine Dauer zu halten, die einem Intervall zwischen zwei benachbarten zweiten periodischen Zeitpunkten entspricht, Vereinigungsmittel (11), um die ersten und zweiten abgetasteten und gehaltenen Ausgänge zu vereinigen, die man von den ersten bzw. zweiten Abtast/Halte-Mitteln (5, 6) erhält, um ein im wesentlichen fortlaufendes Signal zu bilden, das Segmente der ersten und zweiten abgetasteten und gehaltenen Ausgänge enthält, die angeordnet sind, so dass sie sich während jeder vorgegebenen Dauer abwechseln, sowie einen Frequenzmodulator (12), um den Tonträger mit dem im wesentlichen fortlaufenden Signal einer Frequenzmodulation zu unterziehen.

3. Gerät gemäss Anspruch 2, dadurch gekennzeichnet, dass das genannte Vereinigungsmittel (11) Umschaltemittel enthält, um die Segmente des ersten abgestasteten und gehaltenen Ausgangs und die Segmente des zweiten abgetasteten und gehaltenen Ausgangs abwechselnd während jeder vorgegebenen Dauer von den genannten ersten und zweiten abgetasteten und gehaltenen Ausgängen abzuziehen.

4. Gerät gemäss Anspruch 1, dadurch gekennzeichnet, dass das genannte Tonsignal-Verarbeitungsmittel (1 bis 13) eine Umschalteinrichtung (11) aufweist, um Segmente des einen der zweikanaligen Tonsignale sowie Segmente des anderen der zweikanaligen Tonsignale abwechselnd während jeder vorgegebenen Dauer von den zweikanaligen Tonsignalen abzuziehen, sowie einen Frequenzmodulator (12), um den Tonträger mit den Segmenten des einen oder anderen der zweikanaligen Tonsignale mit den Segmenten des einen oder anderen der zweikanaligen Tonsignale einer Frequenzmodulation zu unterziehen, die mit der Umschalteinrichtung (11) abgezogen wurden.

5. Gerät, um zweikanalige Tonsignale und ein Farbvideosignal von einem Magnetband magnetisch wiederzugeben, auf dem die zweikanaligen Tonsignale zusammen mit dem Farbvideosignal, das eine Kombination eines frequenzmodulierten Leuchtdichtsignals und eines frequenzumgesetzten Chrominanzsignals ist, in aufeinanderfolgenden Aufzeichnungsspuren aufgezeichnet sind, die schräg zur Laufrichtung des Magnetbandes verlaufen, wobei das Gerät ein Videosignal-Wiedergabemittel (37) aufweist, um die Leuchtdichte- und Chrominanzsignale in Übereinstimmung mit dem frequenzmodulierten Leuchtdichtesignal und dem frequenzumgesetzten Chrominansignal wiederzugeben, die man vom Magnetband erhält,

dadurch gekennzeichnet, dass ein Tonsignaldemodulator (24) vorgesehen ist, um das frequenzmodulierte Tonsignal, das man vom Magnetband erhält, einer Frequenzmodulation zu unterziehen, wobei dieses Tonsignal erste Segmente eines frequenzmodulierten Signals aufweist, welche man durch die Frequenzmodulation eines Tonträgers, der eine vorgegebene Frequenz (Fa) besitzt, in Antwort auf eins der zweikanaligen Tonsignale erhält, sowie zweite Segmente eines frequenzmodulierten Signals, welche man durch die Frequenzmodulation eines Tronträgers, der eine vorgegebene Frequenz (Fa) besitzt, in Antwort auf das andere der zweikanaligen Tonsignale erhält, wobei die ersten und zweiten Segmente nacheinander und abwechselnd während jeder Multiplexdauer angeordnet sind, wobei der genannte Demodulator (24) abwechselnd demodulierte Ausgänge der ersten und zweiten Segmente erzeugt, und dass ein Tonsignal-Trennmittel (26, 27, 33, 34) vorgesehen ist, um den demodulierten Ausgang der ersten Segmente und den demodulierten Ausgang der zweiten Segmente voneinander zu trennen, um die zweikanaligen Tonsignale in Übereinstimmung mit den getrennten, demodulierten Ausgängen der ersten bzw. zweiten Segmente zu erzeugen.

6. Gerät gemäss Anspruch 5, dadurch gekennzeichnet, dass das genannte Tonsignal-Trennmittel (26, 27, 33, 34) ein erstes Abtast/Haltemittel (26) aufweist, um den modulierten Ausgang der ersten Segmente an jedem ersten periodischen Zeitpunkt abzutasten und den abgetasteten Ausgang für eine Dauer zu halten, die im wesentlichen einem Intervall zwischen zwei benachbarten ersten periodischen Zeitpunkten entspricht, und ein zweites Abtast/Haltemittel (27), um den modulierten Ausgang der zweiten Segmente an jedem zweiten periodischen Zeitpunkt abzutasten und jeden abgetasteten Ausgang für eine Dauer zu halten, die im wesentlichen einem Intervall zwischen zwei benachbarten zweiten periodischen Zeitpunkten entspricht, sowie ein erstes Filter (33), um den abgetasteten und gehaltenen Ausgang, den man von dem ersten Abtast/Haltemittel (26) erhält, durchzulassen, und ein zweites Filter (34), um den abgetasteten und gehaltenen Ausgang, den man von dem zweiten Abtast/Haltemittel (27) erhält, durchzulassen.

7. Gerät, um zweikanalige Tonsignale magnetisch zusammen mit einem Farbvideosignal auf einem Magnetband in aufeinanderfolgenden Aufzeichnungsspuren aufzuzeichnen, die mit einem rotierenden Magnetkopf (18a; 18b) ausgebildet werden, wobei die genannen Spuren schräg zur Laufrichtung des Magnetbands verlaufen, und die zweikanaligen Tonsignale und das Farbvideosignal vom Magnetband magnetisch wiederzugeben, wobei das Gerät enthält:

Leuchtdichtesignal-Verarbeitungsmittel (16), um ein frequenzmoduliertes Leuchtdichtesignal zu erzeugen, das man durch die Frequenzmodulation eines Videoträgers mit einem Leuchtdichtesignal erhält, das Teil des Farbvideosignals ist;

Chrominanzsignal-Verarbeitungsmittel (15), um ein frequenzumgesetztes Chromanzsignal zu erzeugen, das man durch die Frequenzumsetzung eines zusammen mit dem Leuchtdichtesignal das Farbvideosignals bildenden Chrominanzsignals in ein Frequenzband unterhalb jenes Frequenzbands erhält, in dem der Videoträger mit dem Leuchtdichtesignal frequenzmoduliert wird;

Signalmischmittel (14, 17), um ein Mischsignal zu erzeugen, das man erhält, indem man des genannte frequenzmodulierte Tonsignal in die Lage zwischen den Frequenzbändern das frequenzmodulierten Leuchtdichtesignals und des frequenzumgesetzten Chrominanzsignals bringt, wobei das Mischsignal an den rotierenden Magnetkopf (18a; 18b) gelegt wird; und

ein Videosignal-Wiedergabemittel (37), um die Leuchtdichte- und Chrominanzsignale in Übereinstimmung mit dem frequenzmodulierten Leuchtdichtesignal und dem frequenzumgesetzten Chrominanzsignal im Mischsignal wiederzugeben, das man vom Magnetband erhält, wobei das Gerät durch einen Aufbau gekennzeichnet ist, der enthält:

Tonsignal-Verarbeitungsmittel (1 bis 13), die Zeitmultiplex-Operationsmittel (5, 6, 11) aufweisen, die so wirksam sind, dass sie eine Multiplexdauer besitzen, die kleiner als ein Zeilenintervall (Th) des Farbvideosignals ist, sowie einen gemeinsamen Frequenzmodulator (12), wobei die genannten Tonsignal-Verarbeitungsmittel (1 bis 13) dazu vorgesehen sind, ein frequenzmoduliertes Tonsignal zu erzeugen, das erste Segmente eines frequenzmodulierten Signals umfasst, welche man durch die Frequenzmodulation eines Tonträgers, der eine vorgegebene Frequenz (Fa) besitzt, in Antwort auf eins der zweikanaligen Tonsignale erhält, sowie zweite Segmente eines frequenzmodulierten Signals, welche man durch die Frequenzmodulation eines Tronträgers, der eine vorgegebene Frequenz (Fa) besitzt, in Antwort auf das andere der zweikanaligen Tonsignale erhält, wobei die ersten und zweiten Segmente nacheinander und abwechselnd währand jeder Multiplexdauer angeordnet sind, und wobei die genannten Mischmittel (14, 17) mit dem frequenzmodulierten Tonsignal angesteurt wird; und ein Tonsignal-Demodulator (24), um das frequenzmodulierte Tonsignal, das man vom Magnetband erhält, einer Frequenzmodulation zu unterziehen, um demodulierte Ausgänge der ersten und zweiten Segmente abwechselnd zu erzeugen, wobei ein Tonsignal-Trennmittel (26, 27, 33, 34) vorgesehen ist, um den modulierten Ausgang der ersten Segmente und den demodulierten Ausgang der zweiten Segmente voneinander zu trennen, um die zweikanaligen Tonsignale in Übereinstimmung mit den getrennten, demodulierten Ausgängen der ersten bzw. zweiten Segmente zu erzeugen.

**Revendications**

1. Appareil permettant d'enregistrer magnétiquement des signaux audio à deux voies, en même temps qu'un signal vidéo en couleur, sur une bande magnétique, suivant des pistes d'enregistrement successive formées par une tête magnétique rotative (18a; 18b), lesdites pistes s'étendant obliquement par rapport à la direction de défilement de la bande magnétique, comprenant:

un moyen de traitement de signal de luminance (16) servant à produire un signal de luminance modulé en fréquence qui est obtenu par modulation en fréquence d'une porteuse vidéo par un signal de luminance constituant partiellement le signal vidéo en couleur,

un moyen de traitement de signal de chrominance (15) servant à produire un signal de chrominance converti en fréquence que l'on obtient par conversion en fréquence d'un signal de chrominance constituant le signal vidéo en couleur avec le signal le luminance, de façon l'amener sur une bande de fréquence qui est inférieure à la bande de fréquence dans laqeuelle la porteuse vidéo est modulée en fréquence par le signal de luminance, et

un moyen mélangeur de signaux (14, 17) servant à produire un signal mélange que l'on obtient en faisant que le signal audio de modulation en fréquence se trouve entre les bandes de fréquence du signal de luminance modulé en fréquence et du signal de chrominance converti en fréquence et en fournissant à la tête magnétique rotative (18a; 18b) ledit signal mélange;

caractérisé en ce que des moyens de traitement de signal audio (1 à 13), comportant un moyen d'actionnement à multiplexage de durée (5, 6, 11) ayant pour fonction d'avoir une durée de multiplexage plus étroite qu'une période de ligne (Th) dudit signal vidéo en couleur et un modulateur de fréquence commun (12), sont prévus pour produire un signal audio modulé en fréquence comportant des premiers segments d'un signal modulé en fréquence obtenus par modulation en fréquence d'une porteuse audio ayant une fréquence prédéterminée (Fa) en réponse à l'un des signaux audio à deux voies, et des deuxièmes segments d'un signal modulé en fréquence obtenus par modulation en fréquence d'une porteuse audio ayant la fréquence prédéterminée (Fa) en réponse à l'autre des signaux audio à deux voies, lesdits premiers et deuxièmes segments étant destinés à alterner successivement à chaque durée de multiplexage, et ledit moyen de mélange (14, 17) recevant le signal audio modulé en fréquence.

2. Appareil selon la revendication 1, caractérisé en ce que lesdits moyens de traitement de signal audio (1 à 13) comprennent un premier moyen d'échantillonnage et de maintien (5) servant à échantillonner l'un des signaux audio à deux voies à chacun de premiers instants périodiques et à maintenir chaque signal de sortie échantillonné pendant une durée correspondant à la période séparant deux instants contigus desdits premiers instants périodiques, un deuxième moyen d'échantillonnage et de maintien (6) servant à échantillonner l'autre des signaux audio à deux voies à chacun de deuxièmes instants périodiques et à maintenir chaque signal de sortie échantillonné pendant une durée correspondant à la période séparant deux instants contigus desdits deuxièmes instants périodiques, un moyen de combinaison (11) servant à combiner les premier et deuxième signaux de sortie échantillonnés et maintenus qui sont obtenus respectivement desdits premier et deuxième moyens d'échantillonnage et de maintien (5, 6) de façon à former un signal sensiblement continu contenant des segments desdits premier et deuxième signaux de sortie échantillonnés et maintenus qui sont disposés de façon à alterner successivement à chaque dite durée prédéterminée, et un moyen de modulation en fréquence (12) servant à moduler en fréquence ladite porteuse audio à l'aide dudit signal sensiblement continu.

3. Appareil selon la revendication 2, caractérisé en ce que ledit moyen de combinaison (11) comprend un moyen de commutation servant à altrnativement extraire, desdits premier et deuxième signaux de sortie échantillonnés et maintenus, les segments dudit premier signal de sortie échantillonné et maintenu et les segments dudit deuxième signal de sortie échantillonné et maintenu.

4. Appareil selon la revendication 1, caractérisé en ce que lesdits moyens de traitement de signal audio (1 à 13) comprennent un moyen de commutation (11) servant à extraire alternativement à chaque dite durée prédéterminée, des signaux audio à deux voies, les segments de l'un des signaux audio à deux voies et les segments de l'autre des signaux audio à deux voies, et un moyen de modulation en fréquence (12) servant à moduler en fréquence ladite porteuse audio à l'aide desdits segments de l'un et de l'autre des signaux audio à deux voies extraits par ledit moyen de commutation (11).

5. Appareil permettant de reproduire magnétiquement des signaux audio à deux voies et un signal vidéo en couleur à partir d'une bande magnétique sur laquelle les signaux audio à deux voies sont enregistres, en même temps que le signal vidéo en couleur se présentant sous la forme d'une combinaison d'un signal de luminance modulé en fréquence et d'un signal de chrominance convertie en fréquence, suivant des pistes d'enregistrement successives s'étendant obliquement par rapport à la direction de défilement de la bande magnétique, ledit appareil possédant un moyen (37) de reproduction de signal vidéo servant à reproidure les signaux de luminance et de chrominance en fonction du signal de luminance modulé en fréquence et du signal de chrominance converti en fréquence qui sont obtenus à partir de la bande magnétique, caractérisé en ce qu'un moyen de démodulation de signal audio (24) est prévu pour démoduler en fréquence le signal audio modulé en fréquence le signal audio modulé en fréquence qui est obtenu à partir de la bande magnétique, ce signal audio comportant des premiers segments d'un signal modulé en fréquence obtenus par modulation en fréquence d'une porteuse audio possédant une fréquence prédéterminée (Fa) en réponse à l'un des signaux audio à deux voies, et des deuxièmes segments d'un signal modulé en fréquence obtenus par modulation en fréquence d'une porteuse audio possédant la fréquence prédéterminée (Fa) en réponse à l'autre des signaux audio à deux voies, lesdits premiers et deuxièmes segments étant destinés à alterner successivement à chaque durée de multiplexage, ledit moyen de démodulation (24) produisantalternativement des signaux de sortie démodulés des premiers et des deuxiémes segments, et en ce qu'un moyen de séparation de signal audio (26, 27, 33, 34) est prévu pour séparer le signal de sortie démodulé des premiers segments et le signal de sortie démodulé des deuxièmes segments l'un de l'autre et pour produire les signaux audio à deux voies en fonction des signaux de sortie démodulés séparés respectifs des premiers et deuxièmes segments.

6. Appareil selon la revendication 5, caractérisé en ce que ledit moyen de séparation de signal audio (26, 27, 33, 34) comprend un premier moyen d'échantillonnage et de maintien (26) servant à échantillonner le signal de sortie démodulé des premiers segments à chacun de premiers instants périodiques et à maintenir chaque signal de sortie échantillonné pendant une durée correspondant sensiblement à la période séparant deux instants contigus desdits premiers instants périodiques, un deuxième moyen d'échantillonnage et de maintien (27) servant à échantillonner le signal de sortie démodulé des deuxièmes segments à chacun de deuxièmes instants périodiques et à maintenir chaque signal de sortie échantillonné pendant une durée correspondant sensiblement à la période séparant deux instants contigus desdits deuxièmes instants périodiques, un premier moyen de filtrage (33) servant à faire que le signal de sortie échantillonné et maintenu qui est obtenu dudit premier moyen d'échantillonnage et de maintien (26) le traverse, et un deuxième moyen de filtrage (34) servant à faire que le signal de sortie échantillonné et maintenu qui est obtenu dudit deuxième moyen d'échantillonnage et de maintien (27) le travers.

7. Appareil permettant d'enregistrer magnétiquement des signaux audio à deux voies, en même temps qu'un signal vidéo en couleur, sur une bande magnétique suivant des pistes d'enregistrement successives formées par une tête magnétique rotative (18a; 18b), lesdites pistes s'étendant obliquement par rapport à la direction de défilement de la bande magnétique, et permettant de reproduire magnétiquement les signaux audio à deux voies et le signal vidéo en couleur à partir de la bande magnétique, ledit appareil comportant:

un moyen de traitement de signal de luminance (16) servant à produire un signal de luminance modulé en fréquence qui est obtenu par modulation en fréquence d'une porteuse vidéo l'aide d'un signal de luminance constituant partiellement le signal vidéo en couleur;

un moyen de traitement de signal de chrominance (15) servant à produire un signal de chrominance converti en fréquence que l'on obtient par conversion en fréquence d'un signal de chrominance constituant le signal vidéo en couleur avec le signal de luminance de façon l'amener dans une bande de fréquence inférieure à la bande de fréquence dans laqeuelle la porteuse vidéo est modulée en fréquence par le signal de luminance;

un moyen de mélange de signaux (14, 17) servant à produire un signal mélange obtenu en faisant que ledit signal audio de modulé en fréquence se trouve entre les bandes de fréquence dudit signal de luminance modulé en fréquence et dudit signal de chrominance converti en fréquence et en fournissant à la tête magnétique rotative (18a; 18b) ledit signal mélange; et

un moyen de reproduction de signal vidéo (37) servant à reproduire les signaux de luminance et de chrominance en fonction dudit signal de luminance modulé en fréquence et dudit signal de chrominance converti en fréquence contenus dans ledit signal mélangé qui est obtenu à partir de la bande magnétique, ledit appareil étant caractérisé en ce qu'il comprend:

des moyens de traitement de signal audio (1 à 13), comportant un moyen d'actionnement à multiplexage de durée (5, 6, 11) ayant pour fonction d'avoir une durée de multiplexage plus étroite qu'une période de ligne (Th) dudit signal vidéo en couleur et un modulateur de fréquence commun (12), destinées à produire un signal audio modulé en fréquence comportant des premiers segments d'un signal modulé en fréquence obtenus par modulation en fréquence d'une porteuse audio ayant une fréquence prédéterminée (Fa) en réponse à l'un des signaux audio à deux voies, et des deuxièmes segments d'un signal modulé en fréquence obtenus par modulation en fréquence d'un signal audio ayant la fréquence prédéterminée (Fa) en réponse à l'autre des signaux audio à deux voies, lesdits premiers et deuxièmes segments étant destinés à alterner successivement à chaque durée de multiplexage, et ledit moyen de mélange (14, 17) recevant le signal audio modulé en fréquence; et

un moyen de démodulation de signal audio (24) servant à démoduler en fréquence le signal audio modulé en fréquence obtenu à partir de la bande magnétique afin de produire alternativement des signaux de sortie démodulés des premiers et deuxièmes segments, un moyen de séparation de signal audio (26, 27, 33, 34) étant prévu pour séparer le signal de sortie démodulé des premiers segments et le signal de sortie démodulé des deuxièmes segments l'un de l'autre et pour produire les signaux audio à deux voies en fonction des signaux de sortie démodulés séparés respectifs des premiers et deuxièmes segments.

FIG. 1

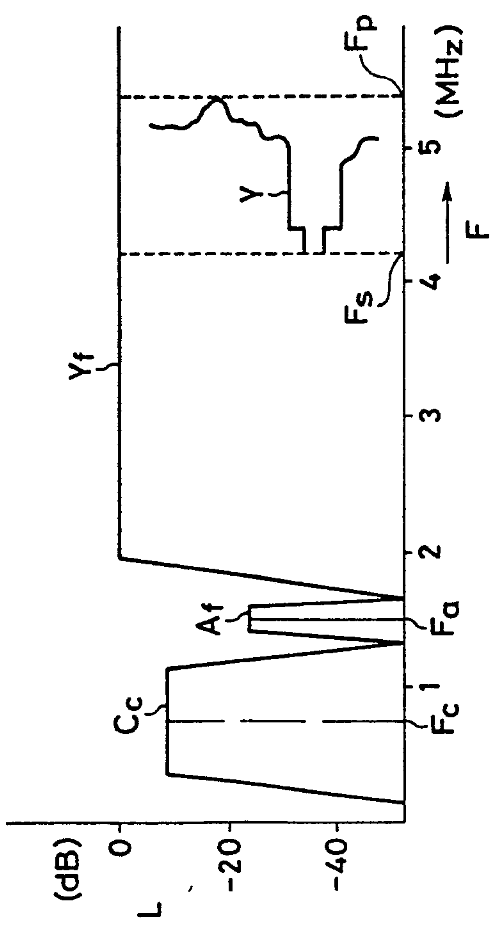
(dB)
L
0
-20
-40
Cc
Fc
Af
Fa
Yf
Y
Fs
Fp
1
2
3
4
5
(MHz)
F

FIG. 2

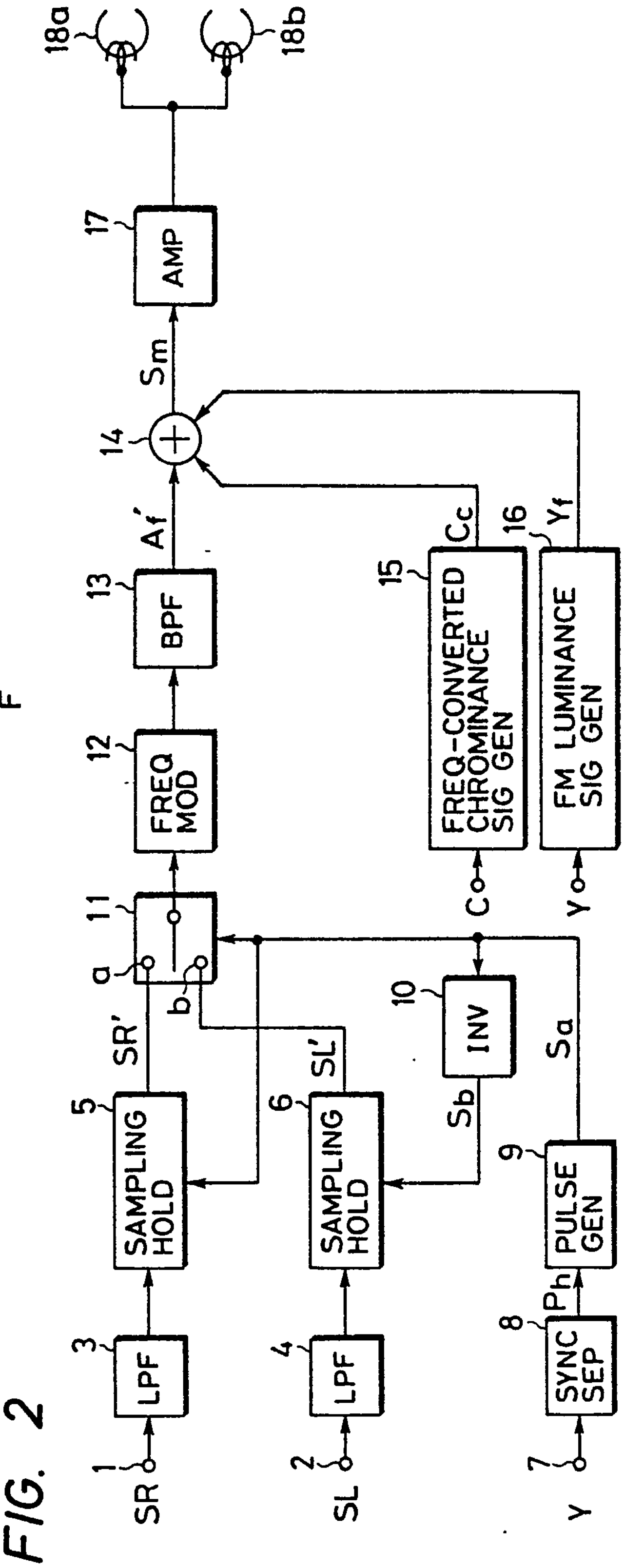
SR
1
LPF
3
SAMPLING HOLD
5
SR'
SL
2
LPF
4
SAMPLING HOLD
6
SL'
Y
7
SYNC SEP
8
Ph
PULSE GEN
9
Sb
INV
10
Sa
a
b
11
FREQ MOD
12
BPF
13
Af'
14
Sm
AMP
17
C
FREQ-CONVERTED CHROMINANCE SIG GEN
15
Cc
Y
FM LUMINANCE SIG GEN
16
Yf
18a
18b

FIG. 3

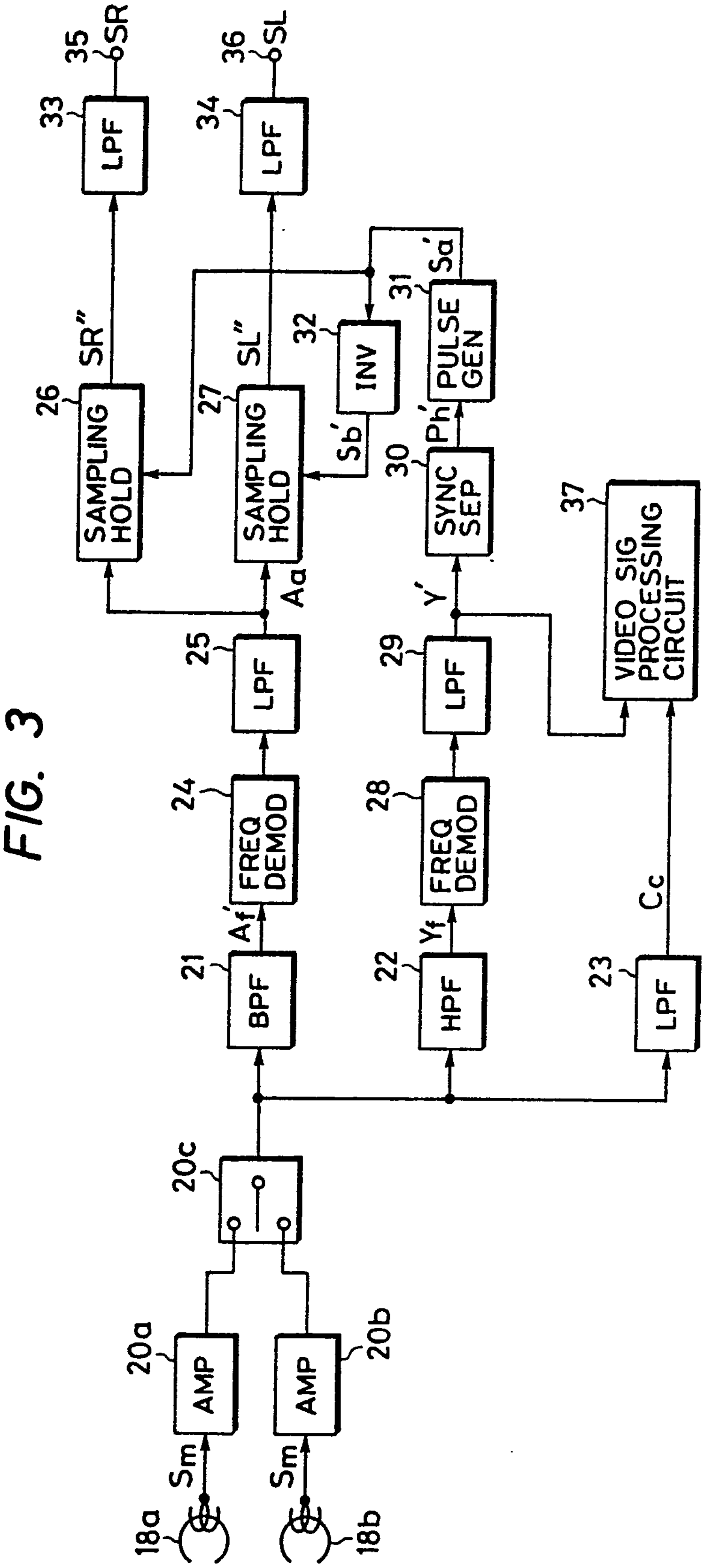
18a
18b
Sm
Sm
AMP
AMP
20a
20b
20c
BPF
21
HPF
22
LPF
23
Af'
Yf
Cc
FREQ DEMOD
24
FREQ DEMOD
28
LPF
25
LPF
29
Aa
Y'
SAMPLING HOLD
26
SAMPLING HOLD
27
SYNC SEP
30
VIDEO SIG PROCESSING CIRCUIT
37
SR''
SL''
Sb'
INV
32
Ph'
PULSE GEN
31
Sa'
LPF
33
LPF
34
35
SR
36
SL

FIG. 4A

FIG. 4B

FIG. 4C

FIG. 4D

FIG. 4E

FIG. 4F

FIG. 4G

FIG. 4H

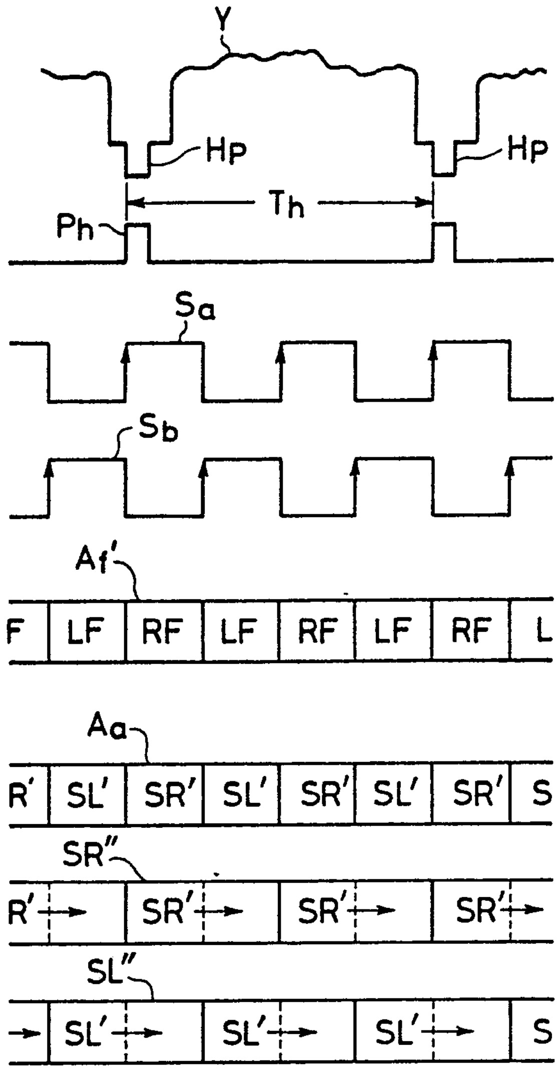


FIG. 5